Europäisches Patentamt

European Patent Office

Office européen des brevets

(11) Veröffentlichungsnummer: **0 305 963 B1**

# EUROPÄISCHE PATENTSCHRIFT

(45) Veröffentlichungstag der Patentschrift: **04.03.92**

(51) Int. Cl.5: **G01N 27/16**, G01N 31/10

(21) Anmeldenummer: **88114101.4**

(22) Anmeldetag: **30.08.88**

(54) **Verfahren zur Analyse eines Gasgemisches.**

(30) Priorität: **02.09.87 DE 3729286**

(43) Veröffentlichungstag der Anmeldung:
**08.03.89 Patentblatt 89/10**

(45) Bekanntmachung des Hinweises auf die
Patenterteilung:
**04.03.92 Patentblatt 92/10**

(84) Benannte Vertragsstaaten:
**DE FR GB NL**

(56) Entgegenhaltungen:
**DE-A- 3 118 936**
**US-A- 4 572 900**

(73) Patentinhaber: **Drägerwerk Aktiengesellschaft**
**Moislinger Allee 53-55**
**W-2400 Lübeck 1(DE)**

(72) Erfinder: **Laurs, Heinz, Dr. Dipl.-Phys.**
**Grefrather Strasse 179**
**W-4060 Viersen(DE)**
Erfinder: **Oepen, Hans-Peter, Dr.**
**Mühlenstrasse 39**
**W-5162 Niederzier(DE)**

# Beschreibung

Die Erfindung betrifft ein Verfahren zur Analyse eines Gasgemisches auf mindestens ein in sehr geringer Konzentration enthaltenes Gas, insbesondere ein Narkosegas aus halogenierten organischen Verbindungen durch ein Meßgerät mit einem Katalysatorelement und einem Gassensor, dei unabhängig voneinander beheizt werden, bei dem das Gasgemisch während der Messung mit dem geheizten Katalysatorelement in Kontakt gebracht wird, an dem das zu messende Gas in Umwandlungsprodukte zerlegt wird und die Umwandlungsprodukte mittels des Gassensors nachgewiesen werden, der im Meßzustand mindestens eines der Umwandlungsprodukte aufnimmt, wobei sich eine Meßgröße des Sensors ändert und bei dem der Gassensor nach der Messung durch Aufheizen auf eine gegenüber dem Meßzustand erhöhte Temperatur in einen Regenerierungszustand gebracht wird, in dem aufgenommene Umwandlungsprodukte wieder abgegeben werden.

Zum Nachweis von Gasen werden häufig Sensoren eingesetzt, deren Meßprinzip darauf basiert, daß die gesuchten Gasbestandteile von dem Sensor aufgenommen werden, wodurch sich eine Meßgröße des Sensors ändert.

Ein wichtiges Beispiel solcher Sensoren sind Halbleitersensoren. Sie bestehen meist aus einer dünnen Schicht aus halbleitendem Material, die sich auf einem entsprechenden Träger befindet. Die Meßgröße ist in diesem Falle der elektrische Widerstand, der sich durch die Gasaufnahme ändert.

Zum Nachweis sehr geringer Gaskonzentrationen von halogenierten Kohlenwasserstoffen sind derartige Sensoren jedoch normalerweise nicht ausreichend empfindlich. Dies gilt insbesondere für den Nachweis von Narkosegasen in der Raumluft. Die zulässigen Grenzwerte liegen hier im Bereich von wenigen ppm. Auf diesem Gebiet wurde eine bedeutende Verbesserung durch die in der DE-A-31 18 936 beschriebene Meßvorrichtung erreicht. Bei dieser Vorrichtung befindet sich in der Nähe der aus Phthalocyanin bestehenden Sensorschicht ein elektrisch beheiztes Katalysatorelement, welches vorzugsweise aus einem Metall aus der Reihe der Platinmetalle besteht. An dem Katalysatorelement wird das Narkosegas in Umwandlungsprodukte umgewandelt. Der Sensor reagiert empfindlich auf diese Umwandlungsprodukte.

Eine derartige Meßvorrichtung ist für die Langzeitbeobachtung der Raumluft auf darin enthaltene Narkosegase geeignet. Wenn man den Sensor mehrere Stunden der Raumluft ausgesetzt läßt, ergeben sich gut meßbare Unterschiede im elektrischen Widerstand. Eine laufende Beobachtung der entsprechenden Gaskonzentrationen ist auf diese Weise allerdings nicht möglich. Außerdem führt der lange Beobachtungszeitraum zu Verfälschungen des Meßergebnisses, insbesondere durch die Coadsorption von Fremdgasen, welche im Laufe der Zeit die Empfindlichkeit des Sensors mindern.

Die Erfindung befaßt sich daher mit dem Problem, Gasmeßgeräte der eingangs näher bezeichneten Art, insbesondere soweit Sensoren verwendet werden, die sehr träge reagieren, dahingehend weiterzuentwickeln, daß eine quasikontinuierliche überwachung des Gasgemisches möglich ist. Außerdem wird eine möglichst einfache Handhabung angestrebt.

Zur Lösung dieser Aufgabe wird vorgeschlagen, daß eine Folge von Meßphasen und Regenerierungsphasen zyklisch wiederholt wird, wobei jeder Zyklus mindestens eine Meß- und eine Regenerierungsphase enthält, eine Meßphase sehr viel kürzer ist als die Zeit, in der der Sensor 90 % seines Endausschlags erreicht und während einer Regenerierungsphase die Temperatur des Katalysatorelements so weit vermindert und die Temperatur des Sensors so weit erhöht wird, daß der Sensor mehr Umwandlungsprodukte abgibt als er aufnimmt.

Jeder Sensor der hier benutzten Bauart hat die Eigenschaft, daß sich die Meßgröße im Laufe der Zeit asymptotisch einem Endausschlag nähert. Dieser Endausschlag entspricht dem Zustand, bei dem die fraglichen Gasbestandteile aufgenommen sind. Da die Zeit bis zum Erreichen des Endausschlags wegen der asymptotischen Annäherung nicht definiert ist, wird als Maß für das Ansprechverhalten derartiger Sensoren häufig die Zeit gewählt, die vergeht, bis der Sensor 90 % seines Endausschlags erreicht hat.

Bei der Erfindung wird nun ein ungewöhnlich kurzer Teil dieser Zeit verwendet. Bevorzugt sind dies weniger als 10 %, besonders bevorzugt weniger als 1 %. In absoluten Werten ausgedrückt, dauert die Meßphase bevorzugt kürzer als 60 s, besonders bevorzugt kürzer als 10 s.

Dadurch, daß während der Regenerierungsphase die Katalysatortemperatur vermindert wird, entstehen weniger Umwandlungsprodukte. Die Erhöhung der Temperatur des Gassensors führt zu einer Veränderung des Adsorptions-Desorptionsgleichgewichts in dem Sinne, daß die Adsorption abnimmt und die Desorption zunimmt. Durch beide Maßnahmen läßt sich erreichen, daß der Sensor während der Regenerierungsphase mehr Umwandlungsprodukte abgibt als er aufnimmt. Dadurch läßt sich die Ausgangslage des Sensors wieder herstellen.

Im einfachsten Falle wechseln sich Meßphasen und Regenerierungsphasen ab und ein Zyklus besteht nur aus einer Meßphase und einer Regenerierungsphase. Dabei wird die Regenerierungsphase so geregelt, daß zu Beginn der nächsten Meßphase der Ausgangswert der Meßgröße (Leitfähigkeit) wieder erreicht ist. Für bestimmte Anwendungszwecke kann es jedoch auch zweckmäßig sein, mehrere Meß- und Regenerierungsphasen in verschiedener Zusammenstellung zu einem Zyklus hintereinander zu schalten, wobei dann bevorzugt mindestens eine Regenerierungsphase so geregelt wird, daß die Meßgröße zu Beginn des neuen Zyklus wieder ihren Ausgangswert erreicht hat.

Die Regelung der Regenerierungsphase kann durch Wahl der Temperaturen von Katalysatorelement und/oder Sensor oder durch die Dauer der Regenerierung erfolgen. Im allgemeinen erfolgt die Regenerierung um so schneller, je niedriger die Temperatur des Katalysatorelements und je höher die Temperatur des Sensors in der Regenerierungsphase sind. Meßtechnisch ist es am einfachsten, beide Werte in der Regenerierungsphase konstant vorzugeben und die Regenerierung über die Zeitdauer zu regeln.

Bei der Erfindung erfolgt die Umschaltung von der Meßphase in die Regenerierungsphase ohne bewegliche Elemente einfach dadurch, daP die Heizleistung des Katalysatorelements und des Sensors entsprechend umgeschaltet wird. Es ist auch nicht erforderlich, während der Regenerierungsphase ein Referenzgas über den Sensor zu leiten. Besonders einfache Verhältnisse ergeben sich, wenn in der Regenerierungsphase überhaupt kein vom Sensor nachweisbares Umwandlungsprodukt entsteht. Dies ist am einfachsten dadurch zu realisieren, daß man den Heizstrom des Katalysatorelements abschaltet. Ob ein vom Sensor nachweisbares Umwandlungsprodukt entsteht, ist jedoch nicht nur von der Temperatur des Katalysatorelements, sondern auch von der Empfindlichkeit des Sensors und damit von dessen Temperatur abhängig. Die Empfindlichkeit ist im allgemeinen um so höher, je niedriger die Temperatur ist.

Die erfindungsgemäße Vorrichtung arbeitet nicht nur schneller als die vorbekannten Vorrichtungen mit ähnlich trägen Sensoren, sondern durch die zyklisch wiederholte Regenerierung werden auch die störenden Effekte der Coadsorption deutlich vermindert und damit eine gleichbleibende Empfindlichkeit erreicht.Außerdem ergibt sich eine Verbesserung der Spezifität des Sensors, d.h. eine Verminderung der Einflüsse von Gasbestandteilen, die nicht dem nachzuweisenden Gas entsprechen.

Die Spezifität läßt sich noch weiter erhöhen, wenn man die Temperatur des Sensors und/oder die des Katalysatorelements in der Meßphase variiert und die Änderung der Meßgröße bei den verschiedenen Temperaturen auswertet.

Da die Entstehung der verschiedenen Umwandlungsprodukte an dem Katalysatorelement bzw. ihre Aufnahme in den Sensor im Regelfall in verschiedener Art und Weise von der Temperatur abhängt, erhält man durch die Messung bei verschiedenen Temperaturen zusätzliche Informationen, die sich nach bekannten Verfahren verwenden lassen, um die Konzentrationen verschiedener Umwandlungsprodukte analytisch voneinander zu unterscheiden. Dabei können die Temperaturen innerhalb einer Meßphase oder auch in verschiedenen Meßphasen eines Zyklus variiert werden.

Eine andere Möglichkeit zur Spezifitätserhöhung besteht darin, mehrere verschiedene Gassensoren zu verwenden, die sich bezüglich der Abhängigkeit der Meßgröße von der Konzentration der Umwandlungsprodukte unterscheiden. Ähnlich wie im vorgenannten Falle läßt sich die verschiedene Änderung der Meßgröße an den verschiedenen Sensoren nutzen, um die Konzentration der verschiedenen Umwandlungsprodukte analytisch zu unterscheiden.

Die Erfindung wird im folgenden anhand eines in den Figuren schematisch dargestellten Ausführungsbeispiels näher erläutert; es zeigen:

Fig. 1     einen Querschnitt eines als Flächenzelle ausgebildeten Nachweiselements im Querschnitt in Verbindung mit einem Blockdiagramm der Meß- und Auswerteschaltung;

Fig. 2     den zeitlichen Verlauf der Temperaturen des Katalysatorelements und der Sensorschicht sowie der Leitfähigkeit in einem Meß- und Regenerierungszyklus.

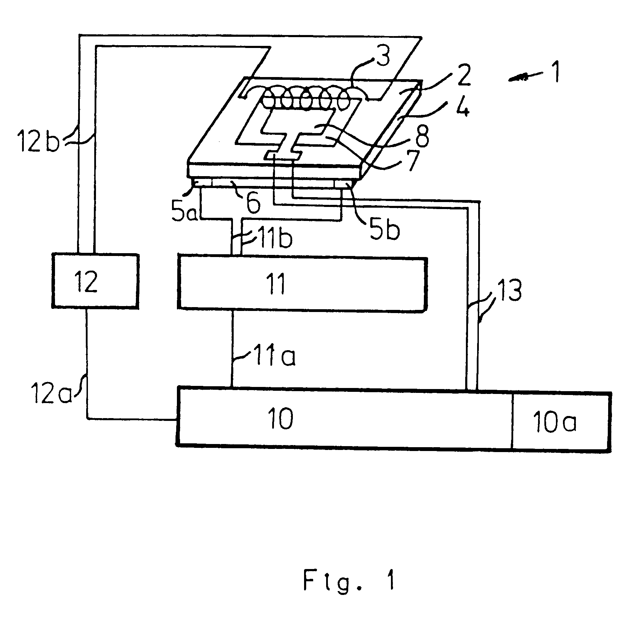

Das in Fig. 1 dargestellte Nachweiselement 1 besteht aus einer Flächenzelle 2 und einem Katalysatorelement 3.

Die Flächenzelle 2 hat einen keramischen Träger 4, an dessen Unterseite sich eine mit Kontaktelementen 5a, 5b versehene Heizschicht 6 befindet. Auf der Oberseite des keramischen Trägers 4 befindet sich der eigentliche Gassensor in Form einer dünnen Schicht 7 aus halbleitendem Material, insbesondere auf der Basis von Phthalocyanin. Die Sensorschicht 7 ist mit beidseitig aufgedampften Anschlußelektroden 8 aus Gold kontaktiert. Die beiden Elektroden befinden sich in der Darstellung der Fig. 1 hintereinander und sind deshalb nicht getrennt zu erkennen.

Das Katalysatorelement ist als beheizbarer Platin-Wendeldraht ausgebildet, der im freien Luftraum ca. 10 mm vor der Sensorschicht 7 angeordnet und wird mit einem nicht dargestellten Halter in seiner Position festgehalten.

Das Nachweiselement 1 entspricht insoweit den bekannten Konstruktionsprinzipien. Bezüglich Einzelheiten der Ausgestaltung sei auf die eingangs zitierte DE-A-31 18 936 verwiesen.

Die stark schematisch in einem Blockschaltbild dargestellte Meß- und Auswerteschaltung hat eine beispielsweise mikroprozessorgesteuerte Zentraleinheit 10, welche den Ablauf der Meß- und Regenerierungsphasen steuert und das empfangene Meßsignal auswertet.

Die Zentraleinheit 10 steuert je eine Stromversorgung 11 und 12 für die Heizschicht 6 des Sensors 7 und für das Katalysatorelement 4. Die Steuerleitungen sind mit 11a bzw. 12a und die Heizstromleitungen mit 11b bzw. 12b bezeichnet.

Über Meßleitungen 13 wird das Meßsignal von dem Gassensor abgegriffen. Der elektrische Widerstand kann nach bekannten Prinzipien bestimmt werden, beispielsweise indem man die Stromstärke bei einer bekannten und konstant vorgegebenen Spannung mißt.

Die Zentraleinheit 10 ist mit einer Anzeigeeinheit 10a verbunden, an der die gemessenen Ergebnisse dargestellt werden. Selbstverständlich können auch entsprechende Peripheriegeräte, wie Druker oder Bildschirmeinheiten angeschlossen sein.

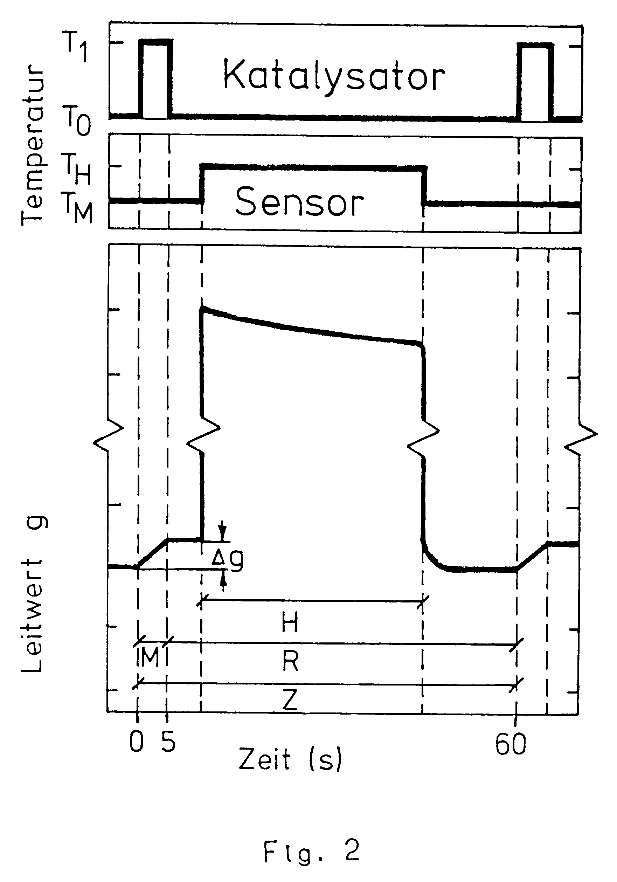

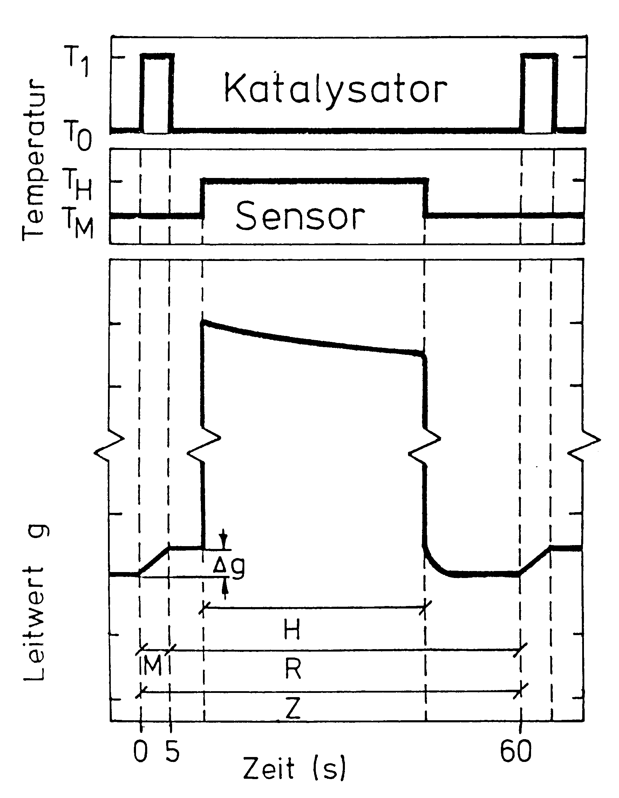

Fig. 2 zeigt einen aus je einer Meßphase und einer Regenerierungsphase bestehenden Zyklus.

Auf der Abszisse ist die Zeit dargestellt. Die Meßphase M beginnt im dargestellten Beispiel zum Zeitpunkt t = 0 und endet bei t = 5 s. Daran schließt sich die Regenerierungsphase R an, welche im dargestellten Beispiel bis t = 60 s dauert.

Fig. 2 besteht aus drei Teilbildern. Das oberste Teilbild zeigt den Temperaturzyklus des Katalysators. Er wird zu Beginn der Meßphase von Raumtemperatur auf eine konstante erhöhte Temperatur (im Beispiel $700\,^{\circ}$C) aufgeheizt, bei welcher das nachzuweisende Gas katalytisch in Umwandlungsprodukte zerlegt wird. Am Ende der Meßphase wird der Heizstrom des Katalysators ausgeschaltet.

Das zweite Teilbild zeigt den Temperaturverlauf der Sensorschicht 7. Sie befindet sich während der Meßphase auf einer konstanten verhältnismäßig niedrigen Temperatur (im Beispiel $T_M = 60\,^{\circ}$C), bei der sie eine gute Empfindlichkeit für die Umwandlungsprodukte hat (Meßzustand). Innerhalb der Regenerierungsphase wird sie während einer Heizphase H auf eine erhöhte Temperatur (z.B. $T_H = 120\,^{\circ}$C) gebracht, bei der die Desorption die Adsorption überwiegt, so daß Umwandlungsprodukte abgegeben werden (Regenerierungszustand). Die Heizphase H liegt vollständig in der Regenerierungsphase R, kann jedoch kürzer als diese sein.

Das unterste Teilbild von Fig. 2 zeigt den Verlauf des Meßwerts des Sensors 7 (im Beispiel des Leitwerts g). Während der Meßphase steigt der Meßwert kontinuierlich an. Die Änderungsgeschwindigkeit ist charakteristisch für die von dem Sensorelement 7 aufgenommenen Umwandlungsprodukte und damit für die Konzentration des zu bestimmenden Gases. Sie läßt sich beispielsweise als Differentialquotient $\Delta g/\Delta t$ bestimmen. Es kann jedoch auch zweckmäßig sein, die Änderungsgeschwindigkeit nach anderen bekannten Prinzipien der Differentialmessung zu bestimmen.

Wenn zu Beginn der Regenerierungsphase die Katalysatortemperatur abgesenkt ist, werden keine Umwandlungsprodukte von dem Sensorelement mehr aufgenommen, so daß der Meßwert konstant bleibt. Die Erhöhung der Temperatur der Sensorschicht führt sofort zu einem starken Anstieg der Leitfähigkeit. Aufgrund der Desorption der Umwandlungsprodukte nimmt die Leitfähigkeit danach langsam ab und fällt am Ende der Heizphase auf den Ausgangswert zurück.

Um zu erreichen, daß der Leitwert zu Beginn des neuen Zyklus (t = 60) wieder den Ausgangswert erreicht hat, muß die Regenerierungsphase entsprechend geregelt werden. Wie erwähnt geschieht dies vorzugsweise, indem die Dauer der Regenerierung des Gassensors 7, d.h. die Heizphase H entsprechend geregelt wird. Dies läßt sich beispielsweise erreichen, indem man die Gesamtänderung des Meßwerts $\Delta g$ in der Meßphase abspeichert und die Dauer der Heizphase H in Abhängigkeit von $\Delta g$ steuert.

Bei dem in Fig. 2 dargestellten Beispiel besteht ein Zyklus nur aus einer Meßphase und einer Regenerierungsphase. Dies ist jedoch nicht notwendigerweise der Fall. Beispielsweise kann es zweckmäßig sein, mehrere Meßphasen alternierend mit konstant ablaufenden Regenerierungsphasen vorzusehen und nur die letzte Regenerierungsphase eines Zyklus so zu regeln, daß zu Beginn der nächsten (zum nächsten Zyklus gehörenden) Meßphase die Meßgröße wieder ihren Ausgangswert erreicht hat.

## Patentansprüche

1. Verfahren zur Analyse eines Gasgemisches auf mindestens ein in sehr geringer Konzentration enthaltenes Gas, insbesondere ein Narkosegas aus halogenierten organischen Verbindungen, durch ein Meßgerät, mit einem Katalysatorelement und einem Gassensor, die unabhängig voneinander beheizt werden,

bei dem das Gasgemisch während der Messung mit dem geheizten Katalysatorelement (3) in Kontakt gebracht wird, an dem das zu messende Gas in Umwandlungsprodukte zerlegt wird und die Umwandlungsprodukte mittels des Gassensors (7) nachgewiesen werden, der im Meßzustand mindestens eines der Umwandlungsprodukte aufnimmt, wobei sich eine Meßgröße des Sensors ändert und

bei dem der Gassensor nach der Messung durch Aufheizen auf eine gegenüber dem Meßzustand erhöhte Temperatur in einen Regenerierungszustand gebracht wird, in dem aufgenommene Umwandlungsprodukte wieder abgegeben werden,

**dadurch gekennzeichnet,** daß

eine Folge von Meßphasen und Regenerierungsphasen zyklisch wiederholt wird, wobei jeder Zyklus mindestens eine Meß- und eine Regenerierungsphase enthält,

eine Meßphase sehr viel kürzer ist als die Zeit, in der der Sensor 90 % seines Endausschlags erreicht, und

während einer Regenerierungsphase die Temperatur des Katalysatorelements (3) so weit vermindert und die Temperatur des Sensors (7) so weit erhöht wird, daß der Sensor (7) mehr Umwandlungsprodukte abgibt als er aufnimmt.

2. Verfahren nach Anspruch 1, **dadurch gekennzeichnet,** daß die Dauer der Meßphase höchstens 10 %, bevorzugt höchstens 1 % der Zeit beträgt, in der der Gassensor 90 % seines Endausschlags erreicht.

3. Verfahren nach Anspruch 1, **dadurch gekennnzeichnet,** daß die Meßphase weniger als 60 s, bevorzugt weniger als 10 s dauert.

4. Verfahren nach Anspruch 1, **dadurch gekennzeichnet,** daß die Temperaturen des Katalysatorelements (4) und des Gassensors (7) in der Meßphase konstant sind.

5. Verfahren nach Anspruch 1, **dadurch gekennzeichnet,** daß die Temperaturen des Katalysatorelements (4) und des Gassensors (7) in der Regenerierungsphase so aufeinander abgestimmt sind, daß kein vom Sensor nachweisbares Umwandlungsprodukt entsteht.

6. Verfahren nach Ansrpuch 1, **dadurch gekennzeichnet,** daß mindestens eine Regenerierungsphase in jedem Zyklus in Abhängigkeit von der von dem Sensor (7) während des Zyklus aufgenommenen Menge an Umwandlungsprodukten so geregelt wird, daß die Meßgröße zu Beginn jedes neuen Zyklus wieder den Ausgangswert hat.

7. Verfahren nach Anspruch 6, **dadurch gekennzeichnet,** daß sich Meßphasen und Regenerierungsphasen abwechseln und die Regenerierungsphase jeweils so geregelt wird, daß die Meßgröße am Ende jeder Regenerierungsphase wieder den Ausgangswert zu Beginn der Meßphase hat.

8. Verfahren nach Anspruch 1, **dadurch gekennzeichnet,** daß das Katalysatorelement aus einem Metall der Platin-Gruppe besteht und in der Meßphase auf eine Temperatur zwischen 250°C und 900°C aufgeheizt wird und daß der Gassensor aus Phthalocyanin besteht und in der Meßphase auf eine Temperatur zwischen 30°C und 100°C temperiert und in der Regenerierungsphase auf eine Temperatur zwischen 100°C und 200°C aufgeheizt wird.

9. Verfahren nach Anspruch 1, **dadurch gekennzeichnet,** daß der Gassensor (7) in den Meßphasen auf verschiedene Temperaturen gebracht und die Änderung der Meßgröße bei den verschiedenen Temperaturen des Sensors ausgewertet wird, um die Konzentration verschiedener Umwandlungsprodukte analytisch voneinander zu unterscheiden.

10. Verfahren nach Anspruch 1, **dadurch gekennzeichnet,** daß das Katalysatorelement (4) in den Meßphasen auf verschiedene Temperaturen gebracht und die Änderung der Meßgröße bei den verschiedenen Temperaturen des Katalysatorelements ausgewertet wird, um die Konzentration verschiedener Umwandlungsprodukte analytisch voneinander zu unterscheiden.

11. Verfahren nach Anspruch 1, **dadurch gekennzeichnet,** daß es mehrere Gassensoren aufweist, die sich bezüglich der Abhängigkeit der Meßgröße von der Konzentration der Umwandlungsprodukte unterscheiden und die verschiedenen Änderungen der Meßgröße an den verschiedenen Sensoren ausgewertet werden, um die Konzentrationen der verschiedenen Umwandlungsprodukte analytisch voneinander zu unterscheiden.

**Claims**

1. Process for the analysis of a gas mixture for at least one gas contained in very low concentration, in particular a narcotic gas of halogenated organic compounds, by means of a measuring device, with a catalyst element and a gas sensor which are heated independently of one another,
wherein during the measurement the gas mixture is brought into contact with the heated catalyst element (3), where the gas to be measured is separated into transformation products and the transformation products are detected by means of the gas sensor (7), which in the measuring state receives at least one of the transformation products, whereby a measured variable of the sensor changes and

wherein, after the measurement, the gas sensor is brought into a regeneration state through heating to a temperature which is higher than when in the measuring state, in which regeneration state received transformation products are delivered again,

characterized in that

a series of measuring phases and regeneration phases is repeated cyclically, whereby each cycle contains at least one measuring phase and one regeneration phase,

a measuring phase is very much shorter than the time in which the sensor achieves 90% of its full-scale deflection, and

during a regeneration phase the temperature of the catalyst element (3) is reduced so much, and the temperature of the sensor (7) is increased so much, that the sensor (7) delivers more transformation products than it receives.

2. Process according to claim 1, characterized in that the duration of the measuring phase amounts to at most 10%, preferably at most 1% of the time in which the gas sensor achieves 90% of its full-scale deflection.

3. Process according to claim 1, characterized in that the measuring phase lasts less than 60 s, preferably less than 10 s.

4. Process according to claim 1, characterized in that the temperatures of the catalyst element (4) and of the gas sensor (7) are constant in the measuring phase.

5. Process according to claim 1, characterized in that the temperatures of the catalyst element (4) and of the gas sensor (7) in the regeneration phase are coordinated with one another in such a way that no transformation product arises which can be detected by the sensor.

6. Process according to claim 1, characterized in that at least one regeneration phase in each cycle is regulated in dependence upon the quantity of transformation products received by the sensor (7) during the cycle in such a way that the measured variable has the starting value again at the beginning of each new cycle.

7. Process according to claim 6, characterized in that measuring phases and regeneration phases alternate and the regeneration phase is in each case regulated in such a way that the measured variable at the end of each regeneration phase again has the starting value at the beginning of the measuring phase.

8. Process according to claim 1, characterized in that the catalyst element comprises a metal of the platinum group and in the measuring phase is heated to a temperature between 250°C and 900°C and that the gas sensor comprises phthalocyanine and in the measuring phase is tempered to a temperature between 30°C and 100°C and in the regeneration phase is heated to a temperature between 100°C and 200°C.

9. Process according to claim 1, characterized in that the gas sensor (7) in the measuring phases is brought to various temperatures and the change of the measured variable at the various temperatures of the sensor is evaluated in order to analytically differentiate the concentration of various transformation products from one another.

10. Process according to claim 1, characterized in that the catalyst element (4) in the measuring phases is brought to various temperatures and the change of the measured variable at the various temperatures of the catalyst element is evaluated in order to analytically differentiate the concentration of various transformation products from one another.

11. Process according to claim 1, characterized in that it has several gas sensors which differ from the concentration of the transformation products with regard to the dependence of the measured variable and the various changes of the measured variable at the various sensors are evaluated in order to analytically differentiate the concentrations of the various transformation products from one another.

**Revendications**

1. Procédé d'analyse d'un mélange de gaz en vue de déceler au moins un gaz contenu dans une très faible concentration, notamment un gaz narcotique constitué de composés organiques halogénés, au moyen d'un appareil de mesure comportant un élément de catalyseur et un détecteur de gaz qui sont chauffés indépendamment l'un de l'autre, dans lequel le mélange de gaz est amené, pendant la mesure, en contact avec l'élément de catalyseur (3) chauffé, sur lequel le gaz à mesurer est décomposé en produits de transformation et les produits de transformation sont décelés au moyen du détecteur de gaz (7) qui, à l'état de mesure, absorbe au moins l'un des produits de transformation, une grandeur de mesure du détecteur étant modifiée et dans lequel le détecteur de gaz est amené, après la mesure, par chauffage à une température supérieure à celle de l'état de mesure, dans un état de régénération dans lequel les produits de transformation absorbés sont à nouveau cédés, caractérisé en ce qu'une succession de phases de mesure et de phases de régénération se renouvelle cycliquement, chaque cycle comportant au moins une phase de mesure et une phase de régénération, en ce qu'une phase de mesure est beaucoup plus courte que le temps pendant lequel le détecteur atteint 90 % de sa valeur maximale et en ce que pendant une phase de régénération, la température de l'élément de catalyseur (3) est réduite et la température du détecteur (7) est augmentée jusqu'à ce que la détecteur (7) cède plus de produits de transformation qu'il n'en absorbe.

2. Procédé selon la revendication 1, caractérisé en ce que la durée de la phase de mesure atteint au plus 10 %, de préférence au plus 1 %, du temps pendant lequel le détecteur de gaz atteint 90 % de sa valeur maximale.

3. Procédé selon la revendication 1, caractérisé en ce que la phase de mesure dure moins de 60 s, de préférence moins de 10 s.

4. Procédé selon la revendication 1, caractérisé en ce que les températures de l'élément de catalyseur (4) et du détecteur de gaz (7) sont constantes pendant la phase de mesure.

5. Procédé selon la revendication 1, caractérisé en ce que les températures de l'élément de catalyseur (4) et du détecteur de gaz (7) sont adaptées l'une à l'autre pendant la phase de régénération, de manière qu'il ne se forme aucun produit de transformation pouvant être décelé par le détecteur.

6. Procédé selon la revendication 1, caractérisé en ce qu'une phase de régénération au moins est réglée dans chaque cycle en fonction de la quantité de produits de transformation absorbés par le détecteur (7) pendant le cycle, de manière que la grandeur de mesure au début de chaque nouveau cycle ait à nouveau la valeur initiale.

7. Procédé selon la revendication 6, caractérisé en ce que des phases de mesure et des phases de régénération alternent et en ce que la phase de régénération est réglée dans chaque cas de manière que la grandeur de mesure à la fin de chaque phase de régénération ait à nouveau la valeur initiale au début de la phase de mesure.

8. Procédé selon la revendication 1, caractérisé en ce que l'élément de catalyseur est un métal du groupe platine et en ce que dans la phase de mesure on porte la température à une valeur comprise entre 250 °C et 900 °C et en ce que le détecteur de gaz est de la phtalocyanine et en ce que dans la phase de mesure, la température est abaissée à une valeur comprise entre 30 °C et 100 °C et en ce que dans la phase de régénération la température est augmentée à une valeur comprise entre 100 °C et 200 °C.

9. Procédé selon la revendication 1, caractérisé en ce que le détecteur de gaz (7) est amené, pendant les phases de mesure, à différentes températures et en ce que la variation de la grandeur de mesure pour les différentes températures du détecteur, est exploitée pour distinguer analytiquement la concentration de différents produits de transformation.

10. Procédé selon la revendication 1, caractérisé en ce que l'élément de catalyseur (4) est amené, dans les phases de mesure, a différentes températures et en ce que la variation de la grandeur de mesure pour les différentes températures de l'élément de catalyseur est exploitée pour distinguer analytiquement la concentration de différents produits de transformation.

11. Procédé selon la revendication 1, caractérisé en ce qu'il a recours à plusieurs détecteurs de gaz qui diffèrent en ce qui concerne la relation entre la grandeur de mesure et la concentration des produits de transformation et en ce que les différentes variations de la grandeur de mesure pour les différents détecteurs sont exploitées pour distinguer analytiquement les concentrations des différents produits de transformation.

Fig. 1

Fig. 2

9